# EUROPEAN PATENT SPECIFICATION

(11) **EP 2 638 942 B1**
(45) Date of publication and mention of the grant of the patent: **21.09.2016**
(21) Application number: 12290089.7
(22) Date of filing: 15.03.2012
(51) Int. Cl.: B01D 45/08, B01D 46/00, F17C 7/04, F02M 21/02

(54) **Mist separation apparatus**
Sprühnebeltrennvorrichtung
Appareil de séparation de brouillard

(43) Date of publication of application: 18.09.2013
(73) Proprietor: Cryostar SAS, 68220 Hesingue (FR)
(72) Inventor: Wilson, Neil, Chalfont St. Giles HP8 4DZ, Buckinghamshire (GB); Barberger, Vincent, 67600 Selestat (FR)
(74) Representative: Christie, Gemma Louise

(56) References cited:
- EP-A1- 0 727 247
- EP-A1- 2 180 231
- WO-A1-2010/007535
- WO-A1-2010/143978
- GB-A- 2 072 642
- US-A1- 2003 045 756

## Description

This invention relates to a mist separation apparatus particularly but not exclusively for use in an installation for supplying natural gas from a storage tank as a fuel for an engine, typically on board a ship or other sea-going vessel.

The use of natural gas as a fuel, for example, on board a ship or other sea-going vessel is becoming increasingly common. The natural gas is stored in one or more tanks in liquid form (i.e. as liquefied natural gas (LNG)). Because LNG has a boiling point of -163°C at 1 bar it will naturally vaporise within the storage tank and a flow of vaporised natural gas can be continuously withdrawn for use as a fuel. Generally, however, the demand for fuel is not always able to be met by natural vaporisation of the LNG. Accordingly, the naturally vaporising natural gas is supplemented with a flow of forcedly vaporised natural gas.

The natural gas is typically compressed in a compressor to the pressure demanded by the engine. It is important to avoid the entry of particles of liquid into the compressor. Such particles may cause damage to the moving parts of the compressor. Accordingly, a mist separator is used upstream of the compressor. The mist separator comprises a vertical vessel having a mesh or other means for disengaging particles of liquid from the gas. There is an outlet for liquid at or near the bottom of the vessel and an outlet at the top of the vessel for gas from which any particles of liquid have been disengaged. The vessel typically has a drain for removing the liquid. If both naturally vaporised natural gas and forcibly vaporised natural gas are to be supplied, the vessel may have one or more inlets for the former and one or more inlets for the latter. Whereas the forcibly vaporised natural gas can be produced at a desired temperature, which can be selected according to passes through the mesh or other liquid disengagement means or can come into contact with a body of liquid yet to be drained and vaporise some of that liquid. The naturally vaporised gas typically contains a small proportion of higher hydrocarbons. These hydrocarbons tend naturally to occur disproportionately in the collected liquid phase. Any revaporisation of the liquid will therefore tend to enhance the concentration of higher hydrocarbons in the natural gas stream to the compressor. Some engines are, however, better operated with natural gas fuels containing a limited quantity of higher hydrocarbons.

WO2010/143978 discloses a separator for separating a fluid flow of gas with droplets, comprising an inlet for the gas to be separated to a rotor with a mesh for coalescing the droplets and releasing coalesced liquid from a peripheral part of the rotor. The mesh generally forms an axial passage for said gas from the inlet, through said rotor, to an outlet for liquid depleted gas, and the rotor with the mesh is arranged for transporting the coalesced liquid laterally out of the axial passage to a wall arranged for receiving the coalesced liquid.

EP 2 180 231 discloses a natural gas delivery station comprising a demister to separate droplets from a vaporised natural gas flow.

According to the present invention there is provided a process for disengaging particles of liquid hydrocarbons contained in natural gas in a natural gas delivery installation comprising the steps of:
- providing a mist separation apparatus comprising a main vessel having a first inlet for a first gas stream and an outlet for gas, the main vessel having a first separator along a gas flow path extending from the first inlet to the outlet, the first inlet being upstream the first separator,
- entering a first gas stream through the first inlet, and
- collecting the natural gas freed of liquid at the outlet,
characterised in that the vessel has a second separator spaced from the first separator along the gas flow path extending from the first inlet to the outlet and a second inlet for feeding a second gas stream into the gas path intermediate the first separator and the second separator, both separators being able to disengage particles of liquid from the gas,
and in that the process further comprises the step of:
- entering a second gas stream that may for periods of time be at a higher temperatur than the first gas stream through the second inlet, this second gas stream coming from a source of naturally vaporising LNG.

The first separator and the second separator may both comprise one or more porous pads, porous meshes, sieve plates, chimney plates (for example, bubble cap plates), or any other similar device for the disengagement of liquid particles from a gas or vapour, or a combination of such devices.

A large number of different configurations are possible for the arrangement of main vessel and separators. For example, the first separator may comprise a horizontal or vertical pad or mesh. Similarly, the second separator may comprise a horizontal or vertical pad or mesh. A horizontally disposed first separator may be used in conjunction with a vertically disposed second separator, or vice versa. Alternatively, both separators may be horizontally disposed or vertically disposed.

The first and second separators preferably both have drains associated therewith, the drains communicating with a liquid collection vessel.

If both the first separator and second separator comprise a horizontally disposed pad or mesh, a tray with gas passages therethrough may be provided intermediate the first and second separators for the purpose of collecting the liquid to be drained as it falls under gravity from the second separator.

In a process according to the invention, the second inlet to the main vessel can typically communicate with a forcing vaporiser of LNG. The forcing vaporiser may receive LNG from a pump in communication with the LNG storage vessel or tank. The outlet to the main vessel may typically communicate with a compressor. The compressor may be employed to provide compressed natural gas to a combustion engine, typically on board a ship or other sea-going vessel. In an alternative arrangement, the outlet to the main vessel may communicate directly with the engine.

The process according to the invention minimises revaporisation by the second gas stream of liquid disengaged from the first gas stream. This result can be of particular value when both gas streams are of natural gas and the resulting natural gas is to be used as a fuel in a combustion engine. This is because the disengaged particles of liquid tend to be relatively rich in heavier hydrocarbons (in comparison with the original gas), the presence of such heavier hydrocarbons typically tending to have a detrimental effect on the quality of the fuel if present in sufficient quantity.

The apparatus and installation for performing the process according to the invention will now be described by way of example with reference to the accompanying drawings, in which:
Figure 1 is a schematic diagram illustrating a first embodiment of the apparatus according to the invention; and
Figures 2 to 4 illustrate schematically alternative embodiments to that shown in Figure 1; and
Figure 5 illustrates schematically an installation for supplying a combustion engine with natural gas in accordance with the invention.

Like parts in the different Figures may be illustrated by the same reference numerals.

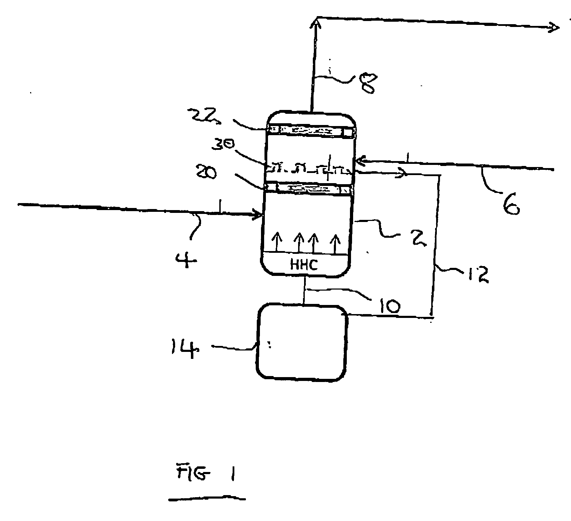

Referring to Figure 1 of the drawings, there is shown a main vessel 2 for disengaging any particles of liquid hydrocarbons contained in natural gas. The main vessel 2 has a first side inlet 4 for natural gas and a second side inlet 6 for natural gas at a higher elevation than the first inlet 4. The vessel 2 is also provided at its top with a gas outlet 8 and at its bottom with a first drain 10 for the flow of liquid under gravity to a drain pot or sump 14.

The main vessel 2 contains two vertically spaced separators 20 and 22. Both of the separators 20 and 22 comprise a plurality of sheets of metal mesh. Typically, each separator comprises a coiled metallic fabric having a thickness in the range 100mm to 200mm (for example 150mm). Gas laden with particles of liquid passes through the apertures in the sheets in operation of the apparatus. Particles of liquid become disengaged from the gas in the separators 20 and 22.

Over a period of time liquid collected in the separator 20 will begin to seep out of it and will be collected at the bottom of the vessel 2. The drain may from time to time be opened, or may be kept permanently open, in order to allow this liquid to fall under gravity into the pot 14.

The first gas stream entering through the inlet 4 is thus freed of liquid droplets by the separator 20 and passes into the space intermediate the separators 20 and 22. There it is joined by a second gas stream admitted to the vessel 2 through the second inlet 6. Any particles of liquid entrained in the second stream of gas are disengaged therefrom by the second separator 22 as the gas rises therethrough. A resultant gas stream freed of liquid exits the separator vessel 2 through the outlet 8. After a period of time, liquid seeps under gravity out of the separator 22. It is collected by a collector 30 intermediate the first separator 20 and the second separator 22. The collector 30 may, for example, be in the form of a bubble cap tray. The chimneys of the bubble cap tray are effective to allow gas to pass therethrough but to allow the liquid from the separator 22 to be collected. The so-collected liquid passes to a second drain 12 communicating with the drain pot 14. Although the drain 12 is shown in Figure 1 having a location outside the main vessel 2, it may alternatively be located internally of the main vessel 2.

In typical operation of the apparatus shown in Figure 1, the inlet 4 communicates with a forcing vaporiser (not shown) of LNG which sends vaporised natural gas to the separator at a temperature of approximately - 100°C. Entrained droplets of unvaporised LNG are disengaged from this gas by passage through the first separator 20. The second inlet 6 communicates with the ullage space of a storage tank (not shown) for LNG. Owing to natural vaporisation, the ullage space tends to contain natural gas at a temperature between -140°C and -50°C. A stream of this gas is fed from the inlet 6 into the flow of the forcibly vaporised natural gas in the space between the separators 20 and 22 within the main vessel 2. Particles of LNG which are introduced into the main vessel 2 with the naturally vaporised natural gas are disengaged in natural gas free of particles of liquid thus passes out of the main vessel 2 through its outlet 8. The liquid collected in the separator 22 tends after a period of time to seep under gravity out of the layers of mesh (or other separating medium) and are intercepted by the tray 30. The LNG so collected is therefore drained into the pot 14. If desired, the pot 14 may from time to time be emptied, the collected liquid typically being returned to the storage vessel communicating with the second inlet 6.

There are a number of alternative configurations of the main vessel 2.

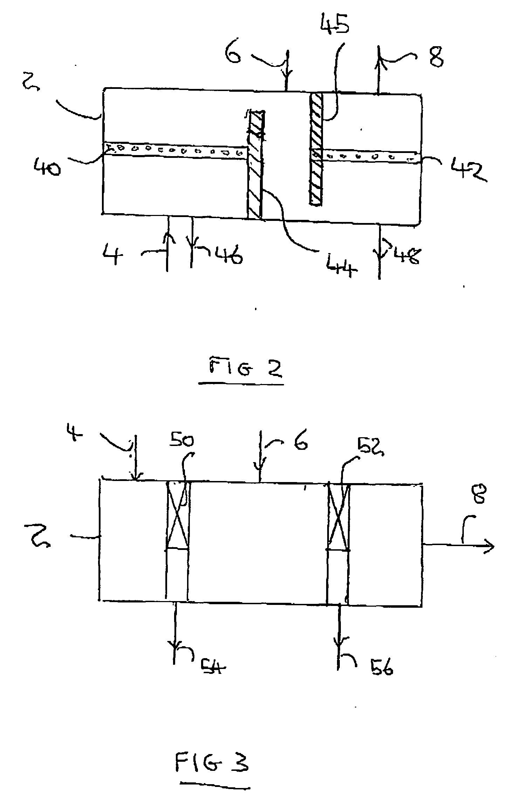

Referring to Figure 2, two horizontally disposed separators 40 and 42 are arranged side by side in the main vessel 2 with a gap therebetween. The separator 40 is disposed on one side (the left hand side, as shown) of a first partition 44 and the other separator 42 is disposed on the other side (the right hand side, as shown) of a second partition 45. The first inlet 4 communicates with the gas space defined between the separator 40 and the partition 44. The second inlet 6 communicates with the space in the main vessel 2 defined between the first partition 44 and the second partition 45. The gas introduced through the inlet 4 passes from below through the separator 40, any particles of liquid being disengaged therefrom by the separator 40. The resulting gas mixes with that introduced through the inlet 6 in the space between the partitions 44 and 45 and passes from below through the separator 42, any particules of liquid being disengaged from the gas by the separator 42. The gas passes out of the vessel 2 through an outlet 8 at the top of the vessel 2.

Drains 46 and 48 are provided beneath the respective separator 40 and 42, the drains 46 and 48 communicating with a drain pot (not shown in Figure 2).

Turning now to Figure 3, two horizontally spaced vertical separators 50 and 52 are provided in the vessel 2. A first inlet communicates with the top of the vessel 2 on its left hand side (as shown). There is thus a generally horizontal flow of gas through the vessel 2. There is a second inlet for gas at the top of the vessel 2 intermediate the separators 50 and 52. Drains 54 and 56 communicate with the separators 50 and 52, respectively, and terminate in a drain pot (not shown in Figure 3). The outlet 8 is located downstream of the separator 52.

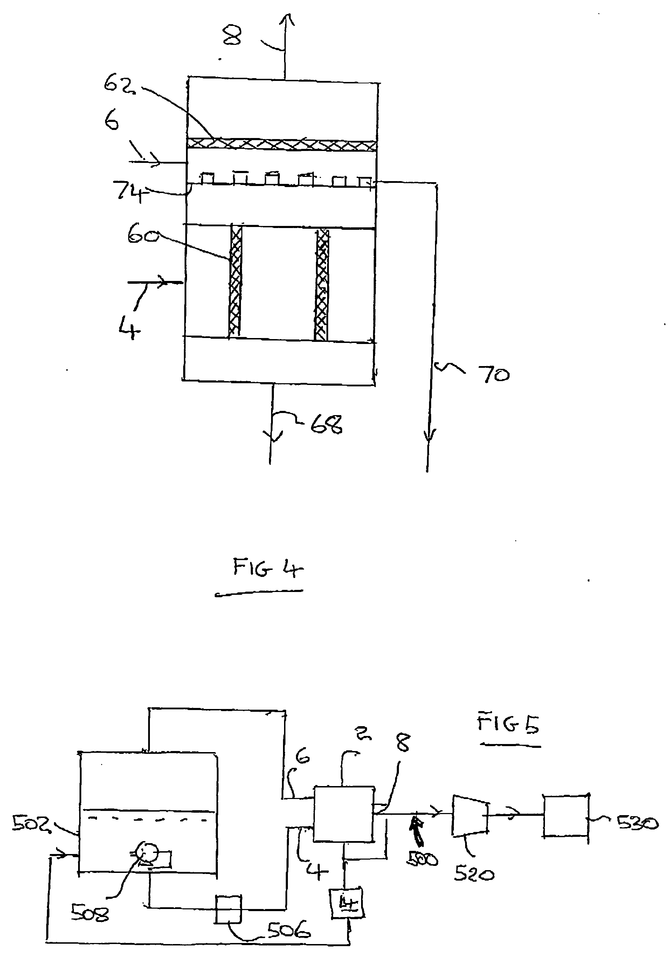

Referring to Figure 4, the arrangement is similar to that shown in Figure 1, save that the lower horizontal separator 20 is replaced by a vertical tubular separator 60. There is radial flow of the first gas stream from an inlet 4, the gas passing from outside the tubular separator 60 to the space located therewithin. The separator 60 disengages particles of liquid from the gas entering the vessel 2 through the inlet 4. The resulting gas, essentially free of liquid particles, is able to pass vertically upwards through the vessel 2 to encounter the second separator 62. This gas mixes with a second stream of gas entering the vessel 2 through the second inlet 6. The resultant gas mixture passes through the second separator 62, which is effective to remove particles of liquid introduced with the second stream of gas or from the mixture. Drains 68 and 70 are provided to collect liquid seeping out of the separators 60 and 62, respectively, and communicate with a drain pot (not shown in Figure 4). A liquid collector tray 74 is located below the second separator 62 but above the first separator 60 so as to catch the liquid from the second separator 62. Its structure and operation may be similar to that of the collector tray 30 shown in and described with reference to Figure 1.

The embodiments of the apparatus according to the invention shown in Figures 1 to 4 all have in common the feature that in consequence of their respective configurations there is no contact between the higher temperature stream of gas admitted to the main vessel 2 through the inlet 6 (for example, naturally vaporised LNG) and the liquid droplets in the lower temperature gas stream admitted to the main vessel 2 through the inlet 4 (for example, forcibly vaporised LNG). As a result, the gas is not enriched in higher boiling point components through vaporisation by the higher temperature gas stream of liquid particles separated from the lower temperature gas stream.

Referring now to Figure 5, an apparatus as shown in Figure 1 is incorporated in an installation 500 which is intended to supply natural gas from a storage tank 502 to a combustion engine 530, for example, a dual fuel diesel engine. The inlet 4 to the vessel 2 communicates with a forcing vaporiser 506 which in turn communicates with a submerged pump 508 within the vessel 502. The vaporiser 506 is effective to vaporise LNG supplied by the pump 508 from the vessel 502. Typically, this resulting vapour or gas is supplied to the inlet 4 at a temperature of -100°C. The second inlet 6 of the vessel 2 communicates directly with the ullage space of the LNG storage tank 502. In operation particles of liquid are disengaged from the feeds to the inlets 4 and 6 and the disengaged liquid is drained into the drain pot 14. The drain pot is connected to the tank 502 so that the liquid can be returned to that tank. The outlet 8 from the vessel 2 is connected to a length of the pipeline 500 leading to a rotary compressor 520. The compressor 520 raises the pressure of the natural gas to that required by a combustion engine 530 in communication with the outlet of the compressor 520.

The installation 500 may be provided on board a sea-going tanker or other vessel for transporting LNG over long distances between a site on which natural gas is liquefied and a site to which the LNG is to be delivered. Typically, a proportion of the LNG is retained for the return voyage. It is during the return voyage, in particular, that the temperature of the natural gas in the ullage space of the tank 502 can rise significantly above that at which the forcibly vaporised LNG is delivered to the inlet 4 by the vaporiser 506. The apparatus according to the invention prevents naturally vaporising LNG from the ullage space of the tank 502 from revaporising significant amounts of higher hydrocarbons in the separator vessel 2 and thereby adversely affecting the quality of the fuel fed to the engine 530.

## Claims

1. Process for disengaging particles of liquid hydrocarbons contained in natural gas in a natural gas delivrery installation comprising the steps of:
- providing a mist separation apparatus comprising a main vessel (2) having a first inlet (4) for a first gas stream and an outlet (8) for gas, the main vessel (2) having a first separator (40 ; 50 ; 60) along a gas flow path extending from the first inlet (4) to the outlet (8), the first inlet (4) being upstream the first separator (40 ; 50 ; 60),
- entering a first gas stream through the first inlet (4), and
- collecting the natural gas freed of liquid at the outlet (8), **characterised in that** the vessel (2) has a second separator (42 ; 52 ; 62) spaced from the first separator (40 ; 50 ; 60) along the gas flow path extending from the first inlet (4) to the outlet (8) and a second inlet (6) for feeding a second gas stream into the gas path intermediate the first separator (40 ; 50 ; 60) and the second separator (42; 52 ; 62), both separators (40, 42 ; 50, 52 ; 60, 62) being able to disengage particles of liquid from the gas,
and **in that** the process further comprises the step of:
- entering a second gas stream that may for periods of time be at a higher temperatur than the first gas stream through the second inlet (6), this second gas stream coming from a source of naturally vaporising LNG.

2. Process according to claim 1, wherein the first separator (40 ; 50 ; 60) and second separator (42 ; 52 ; 62) both comprise one or more porous pads, pads meshes, sieve plates or chimney plates.

3. Process according to claim 2, wherein the first separator (40 ; 50 ; 60) comprises a horizontal or vertical pad or mesh.

4. Process according to claim 2 or claim 3, wherein the second separator (42 ; 52 ; 62) comprises a horizontal or vertical pad or mesh.

5. Process according to any one of the preceding claims, wherein the first and second separators (40, 42 ; 50, 52 ; 60, 62) both have drains associated therewith, the drains communicating with a liquid collection vessel.

6. Process according to claim 5, wherein it comprises the step of opening a drain (10, 12 ; 46, 48 ; 54, 56 ; 68, 70) from time to time.

7. Process according to any one of the preceding claims, wherein the first inlet communicates with a source of forcibly vaporised LNG.

8. Process according to any one of the preceding claims, wherein the said outlet communicates with a compressor.

9. Process according to claim 8 wherein the outlet of the compressor communicates with a combustion engine.

## Patentansprüche

1. Verfahren zum Herauslösen von flüssigen Kohlenwasserstoffteilchen, die in Erdgas in einer Erdgas-Lieferanlage enthalten sind, das die folgenden Schritte umfasst:
- Bereitstellen einer Sprühnebeltrennvorrichtung, die einen Hauptbehälter (2) umfasst, der einen ersten Einlass (4) für einen ersten Gasstrom und einen Auslass (8) für Gas aufweist, wobei der Hauptbehälter (2) einen ersten Abscheider (40; 50; 60) entlang eines Gasströmwegs aufweist, der sich von dem ersten Einlass (4) zum Auslass (8) erstreckt, wobei der erste Einlass (4) dem ersten Abscheider (40; 50; 60) vorgeschaltet ist,
- Einströmen eines ersten Gasstroms durch den ersten Einlass (4), und
- Sammeln des von der Flüssigkeit befreiten Erdgases am Auslass (8),
**dadurch gekennzeichnet, dass** der Behälter (2) einen zweiten Abscheider (42; 52; 62) aufweist, der von dem ersten Abscheider (40; 50; 60) entlang des Gasströmwegs beabstandet ist, der sich von dem ersten Einlass (4) zum Auslass (8) erstreckt, und einen zweiten Einlass (6) zum Zuführen eines zweiten Gasstroms in den Gaspfad zwischen dem ersten Abscheider (40; 50; 60) und dem zweiten Abscheider (42; 52; 62), wobei beide Abscheider (40, 42; 50, 52; 60, 62) dazu fähig sind, Flüssigkeitsteilchen aus dem Gas herauszulösen,
und dass das Verfahren ferner den folgenden Schritt umfasst:
- Einströmen eines zweiten Gasstroms, der zeitweise bei einer höheren Temperatur liegen kann als der erste Gasstrom, durch den zweiten Einlass (6), wobei dieser zweite Gasstrom aus einer Quelle eines natürlich verdampfenden Flüssigerdgases kommt.

2. Verfahren nach Anspruch 1, wobei sowohl der erste Abscheider (40; 50; 60) als auch der zweite Abscheider (42; 52; 62) ein oder mehrere poröse Polster, Polstermaschen, Siebböden oder Kaminböden umfasst.

3. Verfahren nach Anspruch 2, wobei der erste Abscheider (40; 50; 60) ein horizontales oder vertikales Polster oder Geflecht umfasst.

4. Verfahren nach Anspruch 2 oder Anspruch 3, wobei der zweite Abscheider (42; 52; 62) ein horizontales oder vertikales Polster oder Geflecht umfasst.

5. Verfahren nach einem der vorhergehenden Ansprüche, wobei sowohl der erste als auch der zweite Abscheider (40, 42; 50, 52; 60, 62) ihnen zugehörige Abflüsse aufweisen, wobei die Abflüsse in Verbindung mit einem Flüssigkeitssammelbehälter stehen.

6. Verfahren nach Anspruch 5, wobei es den Schritt des gelegentlichen Öffnens eines Abflusses (10, 12; 46, 48; 54, 56; 68, 70) umfasst.

7. Verfahren nach einem der vorhergehenden Ansprüche, wobei der erste Einlass in Verbindung mit einer Quelle von zwangsweise verdampftem Flüssigerdgas steht.

8. Verfahren nach einem der vorhergehenden Ansprüche, wobei der Auslass in Verbindung mit einem Kompressor steht.

9. Verfahren nach Anspruch 8, wobei der Auslass des Kompressors in Verbindung mit einem Verbrennungsmotor steht.

## Revendications

1. Procédé pour la séparation de particules d'hydrocarbures liquides contenus dans du gaz naturel dans une installation de fourniture de gaz naturel comprenant les étapes consistant à :
- fournir un appareil de séparation de brouillard comprenant une cuve principale (2) ayant une première entrée (4) pour un premier flux de gaz et une sortie (8) pour du gaz, la cuve principale (2) ayant un premier séparateur (40 ; 50 ; 60) le long d'un trajet de circulation de gaz s'étendant de la première entrée (4) à la sortie (8), la première entrée (4) étant en amont du premier séparateur (40 ; 50 ; 60),
- faire entrer un premier flux de gaz par la première entrée (4) et
- recueillir le gaz naturel débarrassé du liquide à la sortie (8),
**caractérisé en ce que** la cuve (2) a un second séparateur (42 ; 52 ; 62) à distance du premier séparateur (40 ; 50 ; 60) le long du trajet de circulation de gaz s'étendant de la première entrée (4) à la sortie (8) et une seconde entrée (6) pour l'introduction d'un second flux de gaz dans le trajet de gaz entre le premier séparateur (40 ; 50 ; 60) et le second séparateur (42 ; 52 ; 62), les deux séparateurs (40, 42 ; 50, 52 ; 60, 62) pouvant séparer des particules de liquide du gaz,
et **en ce que** le procédé comprend en outre l'étape consistant à :
- faire entrer par la seconde entrée (6) un second flux de gaz qui peut pendant certaines périodes être à une température plus élevée que le premier flux de gaz, ce second flux de gaz provenant d'une source de GNL se vaporisant naturellement.

2. Procédé selon la revendication 1, dans lequel le premier séparateur (40 ; 50 ; 60) et le second séparateur (42 ; 52 ; 62) comprennent tous deux un ou plusieurs tampons poreux, treillis de tampons, plateaux perforés ou plaques de cheminée.

3. Procédé selon la revendication 2, dans lequel le premier séparateur (40 ; 50 ; 60) comprend un tampon ou treillis horizontal ou vertical.

4. Procédé selon la revendication 2 ou la revendication 3, dans lequel le second séparateur (42 ; 52 ; 62) comprend un tampon ou treillis horizontal ou vertical.

5. Procédé selon l'une quelconque des revendications précédentes, dans lequel les premier et second séparateurs (40, 42 ; 50, 52 ; 60, 62) ont tous deux des purges qui y sont associées, les purges communiquant avec une cuve de recueil de liquide.

6. Procédé selon la revendication 5, comprenant l'étape consistant à ouvrir une purge (10, 12 ; 46, 48 ; 54, 56 ; 68, 70) de temps en temps.

7. Procédé selon l'une quelconque des revendications précédentes, dans lequel la première entrée communique avec une source de GNL vaporisé de façon forcée.

8. Procédé selon l'une quelconque des revendications précédentes, dans lequel ladite sortie communique avec un compresseur.

9. Procédé selon la revendication 8 dans lequel la sortie du compresseur communique avec un moteur à combustion.
